# EUROPEAN PATENT APPLICATION

(11) **EP 1 764 842 A2**
(43) Date of publication of application: **21.03.2007**
(21) Application number: 06110276.0
(22) Date of filing: 22.02.2006
(51) Int. Cl.: H01L 33/00

(54) **Led light source product**

(30) Priority: 19.09.2005 CN 200510103516
(71) Applicant: Shenzhen Diguang Electronics Co., Ltd., Nanshan District, Shenzhen City (CN)
(72) Inventor: Song, Yi, Shenzhen (CN)
(74) Representative: Gervasi, Gemma

(57) **Abstract**

The present invention provides with a LED light source product, comprising LED light sources (1), light-guide materials (6), reflecting materials (7), a LED printed circuitry base (4) and cooling materials (3), in which one or more LED light sources (1) are arranged on the LED printed circuitry base (4). The reflecting materials (7) are arranged on the LED printed circuitry base, the light-guide materials (6) are closely attached to all sides of the LED light sources except the bottom side on the reflecting materials (7) and the LED printed circuitry base (4), and the cooling materials (3) are arranged below and above the LED printed circuitry base (4), so that the LED light source product is characteristic of high light efficiency, even light and good cooling effect.

## Description

### FIELD OF THE INVENTION

The present invention relates to a LED light source product, in particular a LED light source product with great efficiency.

### BACKGROUND ART

The light-emitting efficiency of popular LED light source products in prior art is determined by the light-emitting area and brightness on the top of LED chip. Some LED light source products use different reflecting material and geometry at the bottom and around of LED chip to reflect light partially. According to the international technical level, the mean maximal light efficiency of LED is lower than 401m/w and the greater part of the light energy of LED is changed into heat so that the light can not be guided out and be fully used, or even if the light can be guided out, it can not be used effectively after guiding out, which becomes "leaking light" and heat. For example, the greater part of the light energy of LED guided out is consumed by reciprocate in the light-guide material. Due to the low light efficiency and the high heat consumption of products applied in the current LED backlight, the cost and electric power consumption would be very high if they are used as the LED backlight of Thin-Film Transistor Liquid Crystal Display (TFT-LCD) TV, so it is not applied widely.

### BRIEF DESCRIPTION OF THE INVENTION

The object of the present invention is to provide a LED light source product with great efficiency which can be applied to semi-conductor illuminative products with Light-emitting Diode (LED), in particular be applied to the LED backlight and the LED illuminative lamp.

In order to achieve the object, the LED light source product according to present invention includes LED light sources, light-guide materials, reflecting materials, a LED printed circuitry base and cooling materials, in which one or more LED light sources arranged on the LED printed circuitry base can be monochromatic, dichromatic, tri-chromatic or multi-chromatic, or can be a white light source composed of a blue LED and a fluorescent material. The reflecting materials are arranged around the LED light sources on the LED printed circuitry base, the light-guide materials are closely attached to all sides of the LED light sources except the bottom side on the reflecting materials and the LED printed circuitry base, and the cooling materials are arranged below and above the LED printed circuitry base to attach closely to all sides of the LED light sources except the bottom side.

The LED printed circuitry base is integrated with the reflecting materials and is provided with holes connecting the light-guide materials and the cooling materials. The said holes are circular, rectangular or other geometry shape and the sizes, number and arrangement of holes are designed based on the cooling effect and optic requirement.

The surface of the LED printed circuitry base around the LED light sources is provided with concave and convexity, or printed with various reflecting material and with some figure to increase reflecting efficiency.

The attachment surface of the reflecting material and the light-guide material is provided with concave and convexity, or printed with various reflecting material and with some figure to increase reflecting efficiency, optionally, in the interior of the reflecting material can be provided with granule material.

The sizes and arrangement of the concave and convexity are designed based on the requirement for illuminant efficiency and uniformity, and the geometric shape of the concave and convexity can be rotundity, "V" shape groove, rectangle or other geometric shape, whose sizes can be within the range of 0.005mm-5mm for length or width and 0.005mm-5mm for height. The said arrangement can be matrix, gradual change, disorder or order arrangement.

Machining, laser, chemical etch, heat-press, coat or printing is used for the processing of the concave or convexity.

The light-guide material can be silicone rubber, epoxy resin, ultraviolet-ray cure gel, acrylic resin, or other translucent light-guide material.

A layer of another light-guide material can be provided on the said light-guide material, in which the raw materials for the two light-guide materials can be same or different.

The cooling material can be silicone rubber or other cooling material which attaches closely to all sides of the LED light sources except the bottom side, attaches to the light-guide material, penetrates through the holes on the printed circuitry base and some clearance, and forms as a whole with the housing of said product. The raw material for the cooling material can be same or different with the raw material for the light-guide material.

The inner of the light-guide material is provided with granule material whose sizes, shapes, arrangement, distributing density and properties of the raw material are designed based on the requirement for illuminant efficiency and uniformity.

The abovementioned and other characteristics and advantages of the invention can be better understood through the following detailed description with reference to the drawings.

### BRIEF DESCRIPTION OF THE DRAWINGS

Figure 1 show a schematic view of the LED light source product according to the present invention.
Figure 2 show another schematic view of the LED light source product according to the present invention.
Figure 3 show another schematic view of the LED light source product according to the present invention.

### BEST MODES OF CARRYING OUT THE INVENTION

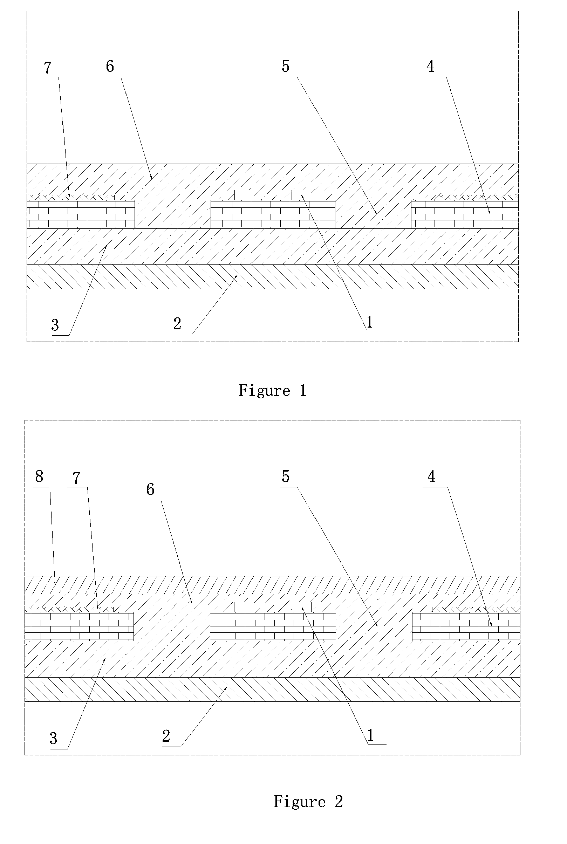

Figure 1 shows a schematic view of the LED light source product according to the present invention. The present invention relates to a LED light source product comprising LED light source 1, light-guide material 6, reflecting material 7, LED printed circuitry base 4 and cooling material 3, in which one or more LED light sources 1 arranged on the LED printed circuitry base 4 can be monochromatic, dichromatic, tri-chromatic or multi-chromatic, or can be a white light source composed of blue LED and fluorescent material. The reflecting material 7 is arranged around the LED light source 1 on the LED printed circuitry base 4, the light-guide material 6 closely attaches to all sides of the LED light source 1 except the bottom side on the reflecting material 7 and the LED printed circuitry base 4, and the cooling material 3 is arranged below and above the LED printed circuitry base 4 to closely attach to all sides of the LED light sources except the bottom side.

The LED printed circuitry base 4 integrated with the reflecting material 7 are provided with holes 5 connecting the light-guide material 6 and the cooling material 3, that is to say, the holes of the LED printed circuitry base 4 are arranged on the position corresponding with the holes of the reflecting material 7 so that they make both the LED printed circuitry base 4 and the reflecting material 7 as a whole, then make the light-guide material 6 attach with the cooling material 3, in which the holes 5 are circular, rectangular or other geometry and the sizes, number and arrangement of the holes are designed based on the cooling effect and optic requirement, for example, the size is within the range of 0.03mm-30mm. Furthermore, with the LED light source product of the present invention, the LED printed circuitry base 4 and the reflecting material 7 can also have no holes 5. In this embodiment, preferably, the light-guide material 6 and the cooling material 3 are silicone rubber with good light and heat conductivity. Since the silicone rubber is formed from liquid state changing into semi-solid state through solidification at room temperature, the light-guide material 6 can be integrated with the cooling material 3 through the hole 5, be closely around the LED light source 1, apply closely to the LED printed circuitry base 4 and the reflecting material 7, and connect to the housing 2 of the LED light source product during the processing, as shown in figure 1.

The surface of the LED printed circuitry base 4 around the LED light source 1 is provided with concave and convexity. The attachment surface of the reflecting material 7 and the light-guide material 6 is provided with concave and convexity too. The sizes and arrangement of the concave and convexity are designed based on the application requirement, and the geometric shape of the concave and convexity can be rotundity, "V" shape groove, rectangle or other geometric shape, whose sizes, for example, can be within the range of 0.005mm-5mm for length or width and 0.005mm-5mm for height. The said arrangement can be matrix, gradual change, disorder or order arrangement. Machining, laser, chemical etch, heat-press, coat or printing is used for the processing of the concave or convexity. Alternatively, the attachment surface of the reflecting material 7 and the light-guide material 6 can be printed with reflecting material and figure instead of concave and convexity, in which the interior of the reflecting material can be optionally provided with granule material. When the light-guide material 6 is silicone rubber, the concave and convexity can be placed on the surface of the reflecting material 7 so that the surface of the light-guide material 6 can be correspondingly shaped with concave and convexity when the surfaces of both reflecting material and light-guide material attach each other during the process of forming. It is possible to reflect the light from the LED light source 1 in certain angle through the concave and convexity instead of light consumed by reciprocate in the light-guide material 6 as in prior art. Then the LED light source of the present invention can greatly increase the light efficiency.

The light-guide material 6 can be silicone rubber, epoxy resin, ultraviolet-ray cure gel (UV), acrylic resin, or other translucent light-guide material. As show in figure 2, another light-guide material 8 can be provided on the said light-guide material 6, in which the raw materials of the two light-guide materials can be same or different. In the case with the additional light-guide material 8, the attachment surface (it is closely above the LED light source 1) between the light-guide material 6 and the light-guide material 8 can be designed as reflecting surface whose size and shape are set according to the requirement, so that the light from the LED light source 1 can be reflected into the light-guide material 6 through the said reflecting surface and further diffused out of the light-guide material 6.

The cooling material 3 can be silicone rubber or other cooling material and can be the same raw material with light-guide material or can be the different raw material. The cooling material 3 attaches closely to all sides of the LED light sources 1 except the bottom side, attaches to the light-guide material 6, penetrates through the holes 5 on the printed circuitry base 4 and some clearance, and forms as a whole with the housing of said product. Having the aid of the cooling material 3, the heat from the LED light source 1 can be transmitted to the cooling material 3 through the holes 5 and further to the housing of the LED light resource through the cooling material 3. In this way, it is possible to cool the LED light source 1 not only by the LED printed circuitry base 4 but also by the cooling material 3, which forms three-dimensional cooling with more cooling area to obtain good cooling effect.

The inner of the light-guide material 6 is optionally provided with granule material whose sizes, shapes, arrangement, distributing density and properties of material are designed based on the requirement for light efficiency and uniformity. For example, the granule material can be metal material, nonmetal material or bleb, its sizes can be within the range of 0.001mm-3mm, its shapes can be hexahedron or pellet. The light from the LED light source 1 would change the direction of beam after touching the granule material. Meanwhile, having the aid of the concave and convexity, the LED light source product of the present invention will more effectively diffuse the light and will increase the light efficiency.

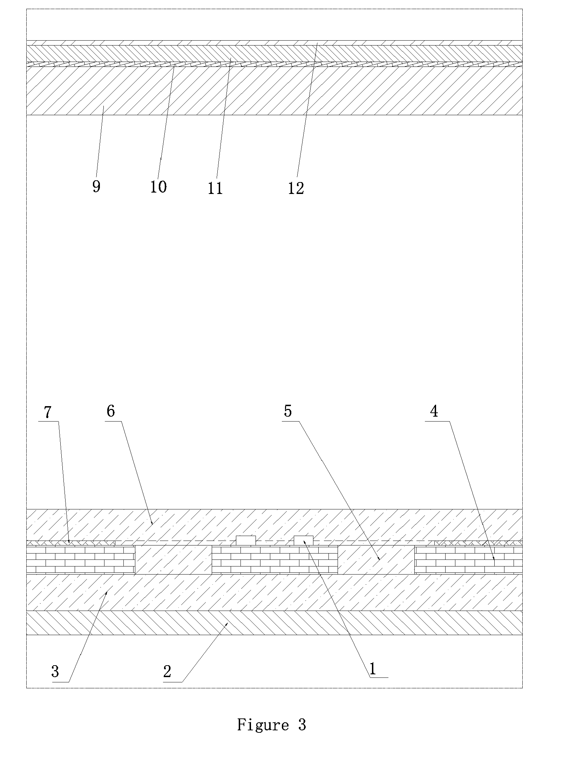

In the LED light source product of the invention, as shown in figure 3, lower diffusing film 10 is placed above and away from the LED light source 1 and the light-guide material 6. Meanwhile, it is possible to provide a diffusing plate 9, a brightness enhancement film 11 and an upper diffusing film 12, which arrange together with the lower diffusing film 10.

All the LED light sources 1 are placed on the printed circuitry base 4, in which the distance and shape of arrangement can be designed base on the using requirement.

It should be understood that the foresaid descriptions with the embodiment is only explanatory and unrestrictive. The invention may be modified and amended on many places without separating from the scope and spirit of the invention, which are limited in the scope of this invention according to claims.

## Claims

1. A LED light source product comprising LED light sources, light-guide materials, reflecting materials, a LED printed circuitry base and cooling materials, wherein one or more LED light sources are arranged on the LED printed circuitry base, the reflecting materials are arranged around the LED light sources on the LED printed circuitry base, the light-guide materials attach closely to all sides of the LED light sources except the bottom side on the reflecting materials and the LED printed circuitry base, and the cooling materials are arranged below and above the LED printed circuitry base to attach closely to all sides of the LED light sources except the bottom side.

2. The LED light source product according to claim 1, wherein the LED light sources can be monochromatic, dichromatic, tri-chromatic or multi-chromatic, or can be a white light source composed of blue LED and fluorescent material.

3. The LED light source product according to claim 1, wherein the LED printed circuitry base integrated with the reflecting material is provided with the holes connecting the light-guide material and the cooling material, wherein the holes are circular, rectangular or other geometry shape and the sizes, number and arrangement of the holes are designed based on the cooling effect and optic requirement.

4. The LED light source product according to claim 1, wherein the surface of the LED printed circuitry base around the LED light source is provided with concave and convexity, or printed with reflecting material and with some figure to increase reflecting efficiency, in which the interior of the reflecting material can be optionally provided with granule material.

5. The LED light source product according to claim 1, wherein the attachment surface of the reflecting material and the light-guide material is provided with concave and convexity, or printed with reflecting material and with some figure to increase reflecting efficiency, in which the interior of the reflecting material can be optionally provided with granule material.

6. The LED light source product according to claim 4 or 5, wherein the sizes and arrangement of the concave and convexity are designed based on the requirement for illuminant efficiency and uniformity, and the geometric shape of the concave and convexity can be rotundity, "V" shape groove, rectangle or other geometric shape, the sizes of which can be within the range of 0.005mm-5mm for length or width and 0.005mm-5mm for height, the said arrangement can be matrix, gradual change, disorder or order arrangement.

7. The LED light source product according to claim 4 or 5, wherein machining, laser, chemical etch, heat-press, coat or printing is used for the processing of the concave or convexity.

8. The LED light source product according to claim 1, wherein the light-guide material can be silicone rubber, epoxy resin, ultraviolet-ray cure gel, acrylics resin, or other translucent light-guide material.

9. The LED light source product according to claim 1, wherein another layer of light-guide material can be provided on the said light-guide material, in which the raw material of the two light-guide materials can be same or different.

10. The LED light source product according to claim 1, wherein the cooling material can be silicone rubber or other cooling material, and the raw material of the cooling material can be same with or different from the light-guide material, said cooling material attaches closely to all sides of the LED light sources except the bottom side, attaches to the light-guide material, penetrates through the holes on the printed circuitry base and some clearance, and forms as a whole with the housing of said product.

11. The LED light source product according to claim 1, wherein the inner of the light-guide material is optionally provided with granule material whose sizes, shapes, arrangement, distributing density and properties of material are designed based on the requirement for illuminant efficiency and uniformity.
